# EUROPÄISCHE PATENTSCHRIFT

(11) **EP 1 532 780 B1**
(45) Veröffentlichungstag und Bekanntmachung des Hinweises auf die Patenterteilung: **21.12.2005**
(21) Anmeldenummer: 03792394.3
(22) Anmeldetag: 20.08.2003
(51) Int. Cl.: H04L 12/56

(54) **EFFIZIENTES INTRA-DOMAIN ROUTING IN PAKETNETZEN**
EFFICIENT INTRA-DOMAIN ROUTING IN PACKET-SWITCHED NETWORKS
ACHEMINEMENT D'INTRA-DOMAINE EFFICACE DANS DES RESEAUX DE COMMUTATION PAR PAQUETS

(30) Priorität: 21.08.2002 DE 10238291
(43) Veröffentlichungstag der Anmeldung: 25.05.2005
(73) Patentinhaber: SIEMENS AKTIENGESELLSCHAFT, 80333 München (DE)
(72) Erfinder: CHARZINSKI, Joachim, 85764 Oberschleissheim (DE); SCHRODI, Karl, 82538 Geretsried (DE); REICHERT, Christoph, 10589 Berlin (DE); WILLMANN, Gert, 70184 Stuttgart (DE)
(86) Internationale Anmeldenummer: PCT/EP2003/009231
(87) Internationale Veröffentlichungsnummer: WO 2004/019565

(56) Entgegenhaltungen:
- EP-A- 0 465 090
- EP-A- 1 045 553
- US-B1- 6 185 619
- SIMPSON W: "IP in IP Tunneling" NETWORK WORKING GROUP RFC 1853, Oktober 1995 (1995-10), XP002051505 Gefunden im Internet: <URL:HTTP://WWW.IT.KTH.SE/DOCS/RFC/RFCS/RF CL1853.TXT>
- DOWNEY T: "Overview of tag switching" ELECTRONICS INDUSTRIES FORUM OF NEW ENGLAND, 1997. PROFESSIONAL PROGRAM PROCEEDINGS BOSTON, MA, USA 6-8 MAY 1997, NEW YORK, NY, USA,IEEE, US, 6. Mai 1997 (1997-05-06), Seiten 61-66, XP010234255 ISBN: 0-7803-3987-8

## Beschreibung

Die Erfindung betrifft ein Verfahren, einen Randrouter und einen inneren Router zum Routing von Datenpaketen in einem Paketnetz mit Verkehrsverteilung

Ein wichtiges Arbeitsgebiet von Netzwerktechnikern sowie Routing- und Internetexperten ist die Weiterentwicklung von Paketnetzen. Ein wichtiges Ziel dieser Weiterentwicklung ist es, ein umfassendes Spektrum an Diensten über Paketnetze anbieten zu können.

Neben den herkömmlichen Anwendungen zur Datenübertragung sollen mehr und mehr Dienste mit Echtzeitanforderungen wie Telephonie (z.B. Voice over IP) und Übertragung von Bildinformationen in Echtzeit (z.B. Video on demand, Videokonferenzen) über Paketnetze realisiert werden. Daraus ergeben sich neue Anforderung an die Paketnetze. Die Einhaltung von Qualitätsmerkmalen für Dienste mit Echtzeitanforderungen - es wird in diesem Zusammenhang häufig von quality of service, abgekürzt QoS, gesprochen - von zentraler Bedeutung.

Die zur Zeit populärsten Paketnetze basieren auf dem IP (Internet Protocol) Protokoll. Ihr Erfolg erklärt sich zur einem großem Maße aus ihrer vergleichsweise geringen Komplexität und ihrer hohen Flexibilität. Beides hat seinen Ursprung in der Weise, wie Pakete im IP Netz befördert werden.

Innerhalb von IP Netzen werden die Pakete anhand ihrer IP Adressen geroutet. In dem überwiegenden Teil der Fälle erfolgt das Routing auf einer per Hop Basis, d.h. die einzelnen Router identifizieren anhand der Paketadresse ein Ziel, üblicherweise ein weiterer Router, zu dem das jeweilige Paket weitergeleitet wird. Am Ende der Übertragung über eine Kette von Routern steht die Zustellung des Pakets an die Zieladresse, häufig ein Host oder ein Gateway.

Der einzelne Router verfügt in der Regel über keine auf den Übertragungspfad bezogenen Informationen, die über den nächsten Hop bzw. die nächste Etappe hinausgehen. Die Vorhaltung und Verwaltung der Routingtabellen wird dadurch verhältnismäßig aufwandsarm. Das Verfahren ist zudem insofern flexibel, als Alternativen und Standardziele für den nächsten Hop vorgesehen werden können, die z.B. bei Störfällen oder unbekannten Adressen die Weitervermittlung der Pakete gewährleisten.

IP Netze mit herkömmlicher Routing-Technik sind für Echtzeitverkehr wenig geeignet. Die Verzögerung und der Verlust von Paketen unterliegt keiner hinreichend strengen Kontrolle, um die für die Echtzeitübertragung notwendigen Qualitätsmerkmale garantieren zu können.

Methoden zur besseren Kontrolle von übertragungsparametern beinhalten die Reservierung von Übertragungskapazität für Dienste mit Echtzeitanforderungen und die Vorgabe von Übertragungspfaden im Netz. Zur Reservierung von Bandbreite in IP Netzen wurde das RSVP (Resource Reservation Protocol) Signalisierungsprotokoll entwickelt. Das RSVP Protokoll wird unter anderem zusammen mit dem MPLS (Multiprotocol Label Switching) Protokoll verwendet, das eine Festlegung des Übertragungsweges erlaubt. Das MPLS Protokoll sieht vor, dass ein Paket bei Eintritt in eine Netz durch einen Edgerouter LSR (Label Switching Router) ein Label zugeteilt bekommt, das für das Paket einen Pfad LSP (Label Switched Path) durch das Netz festlegt. Die Weiterleitung des Pakets durch innere Router LSR (Label Switching Router) erfolgt dann entsprechend dem durch das Label festgelegten Pfad LSP.

Eine Pfadwahl findet auch im Rahmen der ATM (Asynchroneous Transfer Mode) Technik statt und kann für IP Netze auch mittels der (in der Praxis allerdings selten unterstützen) Source Route Option des IP Datagramms vorgenommen werden.

Die Reservierung von Pfaden erlaubt Garantieaussagen hinsichtlich einer QoS Übertragung, ist aber mit hoher Komplexität und mit dem Verlust an Flexibilität (im Vergleich zu "best effort" Paketnetzen) verbunden. Aus dem Dokument EP-A-1 045 533 ist ein Verfahren bekannt, bei dem durch ein Kernnetz mit inneren Routern und Rand routern, Verbindungen zwischen lokalen Netzen in einem Kernnetz geschaltet werden können.

Die Aufgabe der Erfindung ist effizientes Routing in Sinne einer QoS Übertragung über ein Paketnetz unter Vermeidung von Nachteilen herkömmlicher Methoden.

Die Aufgabe wird durch eine Verfahren nach Anspruch 1 und einen inneren Router nach Anspruch 16 gelöst.

Im Rahmen der Erfindung wird ein Verfahren zum Routing von Datenpaketen in einem Paketnetz mit Verkehrsverteilung vorgeschlagen. Bei dem erfindungsgemäßen Verfahren wird ein Datenpaket von einem inneren Router des Datennetzes weitergeleitet bzw. geroutet, wobei die Weiterleitung bzw. das Routing des Paketes anhand von zumindest zwei Informationen erfolgt. Eine dieser beiden Informationen ist die Schnittstelle bzw. der Knoten, wo das Datenpaket in das Paketnetz gelangt ist und die zweite Information ist die Schnittstelle bzw. der Knoten, wo das Datenpaket das Datennetz verlassen soll. Im Gegensatz zu herkömmlichen Verfahren wie der ATM-Technologie oder der MPLS-Technologie wird kein vollständiger Pfad durch das Paketnetz festgelegt. Fixiert werden nur der Zugangspunkt des Datenpaketes zu dem Datennetz und der Punkt bzw. die Schnittstelle, wo das Datenpaket das Datennetz wieder verlässt. Im Inneren des Paketnetzes wird mit Verkehrsverteilung gearbeitet. D.h. zum Beispiel, dass Router Alternativen für die Weiterleitung von Datenpaketen vorgegeben bekommen, die sie beispielsweise bei Ausfall eines Links oder im Rahmen von einer statistischen Verteilung über alternative Wege für das Routing verwenden können. Für die Festlegung von Eintritts- bzw.

Austrittspunkten von Datenpaketen (d.h. die Schnittstellen, bei denen die Datenpakete in das Netz eintreten bzw. das Netz wieder verlassen) können z.B. Kennungen an Randknoten bzw. Ports von Randknoten vergeben werden. Eine derartige Kennung bezeichnet dann die Knoten bzw. die Ports der Knoten, über die das Datenpaket in das Paketnetz gelangt ist bzw. das Paketnetz verlassen soll.

Innerer Router bzw. innerer Knoten ist hierbei auf das Weiterleiten des Datenpaketes durch das Paketnetz bezogen und beinhaltet alle Router bzw. Knoten, die nicht identisch dem Eintritts- oder Austrittsknoten sind. Die Menge der Router, die Schnittstellenfunktion bezüglich anderer Netze haben und topologisch am Rande des Netzes platziert sind, werden Edge Router genannt. Die komplementären Router heißen dann Core Router. Im Rahmen dieser Terminologie ist innerer Router und Core Router nicht identisch. Wenn beispielsweise der Pfad des Datenpaketes beim Routing durch das Paketnetz über mehrere Core Router führt, sind nur die beiden Core Router bei denen das Datenpaket in das Netz eintritt bzw. austritt auch innere Router im Sinne der Beschreibung.

Bei dem Paketnetz kann es sich auch um ein Teilnetz oder Subnetz handeln. In IP (Internet Protocol) Systemen gibt es z.B. Netzarchitekturen, bei denen das Gesamtnetz in "autonome Systeme" bzw. "autonomous system" genannte Netze unterteilt ist. Das erfindungsgemäße Netz kann z.B. ein autonomes System oder der Teil des Gesamtnetzes im Zuständigkeitsbereich eines Dienstanbieters (z.B. ISP: internet service provider) sein. Im Falle eines Teilnetzes können über eine Verkehrskontrolle in den Teilnetzen und eine effiziente Kommunikation zwischen den Teilnetzen Dienstparameter für eine Übertragung über das Gesamtnetz festgelegt werden.

Im Paketnetz wird Verkehrsverteilung vorgenommen. Dabei können Router des Datennetzes Verkehr zu alternativen nächsten Stationen bzw. Hops verteilen. Diese Verteilung kann z.B. pro Paket oder pro Flow erfolgen. Das Routing über alternative Routen bzw. Pfade kann bei Ausfällen von Verbindungsabschnitten oder zwecks gleichmäßigerer Verteilung des Datenverkehrs vorgenommen werden. Die Erfindung erlaubt lokale Entscheidungen über die Weiterleitung von Datenpaketen anhand von Informationen über den Eintritts- und Austrittspunkt. Es erfolgt in der Regel keine starre Festsetzung des Pfades von Datenpaketen bei deren Eintritt in das Paketnetz.

Die Erfindung hat den Vorteil einer größeren Flexibilität gegenüber Methoden, die eine vollständige Festlegung des Übertragungspfades vorsehen. Durch Zugangskontrollen am Rande des Netzes kann sichergestellt werden, dass das Verkehrsaufkommen innerhalb des Netzes innerhalb von Grenzen bleibt, die eine Übertragung mit QoS Niveau erlauben. Durch die Verkehrsverteilung innerhalb des Netzes kann dafür gesorgt werden, dass bei einzelnen Links keine Engpässe auftreten. Probleme von herkömmlichen Paketnetzen wie das Kreisen von Paketen wird vermieden.

Das Einbeziehen der Ursprungsinformation in die Weiterleitungsentscheidung eines Routers ermöglicht es, eine größere Vielfalt von Wegen zuzulassen als bei klassischem IP-Routing bzw. ECMP (equal cost mulipath). Der damit verbundene Anstieg der Komplexität der Routing-Tabellen wird durch die Reduktion der Routing-Tabellen auf auf den Eintrittspunkt und den Austrittspunkt bezogene Informationen (z.B. Eingangs- und Ausgangsknotennummern) in einem Netz gering gehalten, die resultierenden Routing-Tabellen werden in der Regel kleiner sein als bei klassischem IP-Routing. Im Gegensatz zu MPLS wird kein expliziter Aufbau von Pfaden benötigt, und alle Netzknoten können die Wegevielfalt autonom ausschöpfen, um eine Verkehrsverteilung oder eine schnelle lokale Reaktion auf Fehler zu erreichen.

Für die Versorgung des inneren Routers mit den Informationen über den Eintritts- und Austrittspunkt werden im folgenden drei Möglichkeiten skizziert.

Beispielsweise kann am Eintrittspunkt das Datenpaket mit einem oder mehreren Informationsfeldern bzw. Labels versehen werden, die die Informationen bezüglich Eintritts- und Austrittspunkt des Datenpaketes beinhalten. Dieses Informationsfeld bzw. diese Informationsfelder können als Header bzw. Trailer, dem Datenpaket vorangestellt oder an das Datenpaket angestückelt werden. Dabei kann ein Informationsfeld sowohl die Information über den Eintrittspunkt wie über den Austrittspunkt als auch ein eigenes Informationsfeld jeweils die Information über den Eintrittspunkt bzw. den Austrittspunkt umfassen. Den Informationsfeldern bzw. Labels kann eine Bitfolge vorangestellt werden, um das Informationsfeld als solches zu kennzeichnen. Eine Option ist es, mit MPLS-Labeln zu arbeiten und für jedes Paar von Eingangsknoten und Ausgangsknoten einen MPLS-Label zu vergeben. Für jedes der Label werden dann verschiedene alternative Pfade innerhalb des Datennetzes festgelegt. Beim Routing innerhalb des Netzes kann dann der innere Router das Label identifizieren und lokal eine Entscheidung treffen, auf welchen der zu dem Label gehörigen Pfaden er das Datenpaket weiterleitet. Sinnvollerweise werden Datenpakete eines Ende-zu-Ende-Flows, d.h. Datenpakete mit der selben Ursprungs- und Zieladressinformation (z.B. IP-Adressen und evtl. TCP-Portnummern) entlang desselben Pfades geroutet, um die Reihenfolge der Datenpakete zu erhalten.

Informationsfelder, die bei einem Eingangsknoten bzw. Eingangsrouter des Datennetzes dem Datenpaket zugefügt werden, können am Ausgangspunkt bzw. Ausgangsrouter wieder entfernt werden. Im inneren Router können z.B. Routingtabellen vorgehalten werden, die die Informationen über die Zugangsschnittstelle des Datenpaketes und die Information über die Ausgangsschnittstelle mit einer Adresse für das Weiterleiten des Datenpaketes in Relation setzen. Eine derartige Tabelle umfasst dann für Paare von Zugangsschnittstellen und Ausgangsschnittstellen die Adresse für den nächsten Hop des Datenpaketes. Es können zudem weitere alternative Adressen im Sinne einer Verkehrsverteilung bzw. eines Backups im Falle von Störungen oder Verzögerungen auf einen der von dem inneren Router wegführenden Links in der Tabelle angeordnet werden. Anstelle von klassisch organisierten Tabellen kann auch eine Suche über moderne Suchstrukturen und Algorithmen, die beispielsweise entsprechend einer Baumstruktur vorgehen, durchgeführt werden.

Eine andere Option, die Informationen über Zugangsschnittstelle bzw. Ausgangsschnittstelle für das Datenpaket von dem Eingangsknoten zu dem inneren Router übermitteln, ist vorhandene, nicht benötigte Felder des Datenpaketes zu verwenden. Beispielsweise ist vorstellbar, dass die Source-Route-Option eines IP-Datagramms verwendet wird, um Adressinformationen für Eingangs- und Ausgangsschnittstelle des Datenpaketes zu speichern. Diese Informationen werden dann beim Eingang des Netzes in das Datagramm geschrieben und dann im Zuge der Routingentscheidung von dem inneren Knoten aus dem Datagramm extrahiert. Die Informationen über Zugangsschnittstelle bzw. Ausgangsschnittstelle können dann bei Verlassen des Netzes wieder aus den Feldern des Datenpakets entfernt werden, so dass diese wieder für ihre ursprünglichen Zwecke zur Verfügung stehen.

Eine dritte Möglichkeit ist es, dass der innere Knoten anhand von aus dem Datenpaket extrahierten Adressinformationen den Zugangspunkt und den designierten Ausgangspunkt für das Datenpaket identifiziert.

Eine für Eingangs- und Ausgangspunkt unterschiedliche Vorgehensweise zur Bestimmung der Information über die Zugangsschnittstelle des Datenpaketes zu dem Paketnetz und der Information über die Ausgangsschnittstelle, bei der das Datenpaket das Datennetz verlassen soll, ist ebenfalls möglich.

Z.B. kann bei dem Eintritt des Paketes in das Netz das Paket mit einem Informationsfeld mit der Kennung des Eintrittsknoten versehen werden. Der innere Router extrahiert dann die Kennung und bestimmt den Ausgangsknoten z.B. mit Hilfe einer Tabelle. Andere Kombinationen unterschiedlicher Vorgehensweisen zur Bestimmung der beiden auf die Eingangsschnittstelle bzw. die Ausgangsschnittstelle bezogenen Informationen sind ebenfalls möglich.

Die Erfindung wird im folgenden anhand von Figuren im Rahmen eines Ausführungsbeispiels näher erläutert. Es zeigen:
- Fig.1:: eine vereinfachte Darstellung eines Paketnetzes
- Fig.2:: herkömmliche Routingtabellen für das Beispielnetz von Fig.1
- Fig.3:: schematische Darstellung für die erfindungsgemäße Verwendung von Labels
- Fig.4:: erfindungsgemäße Routingtabellen

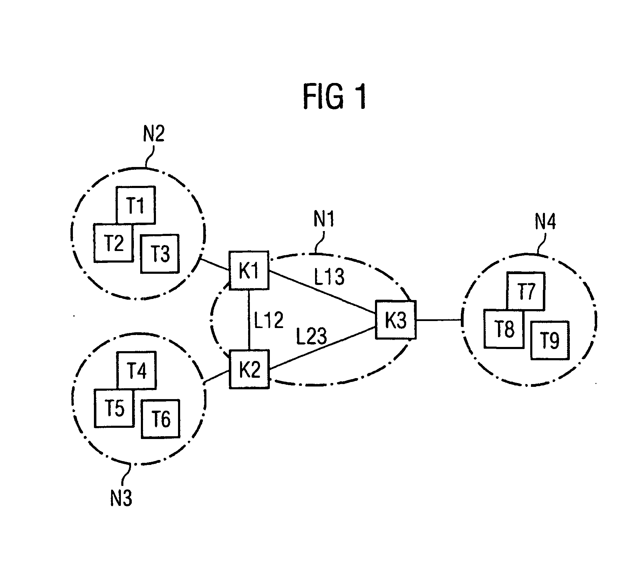

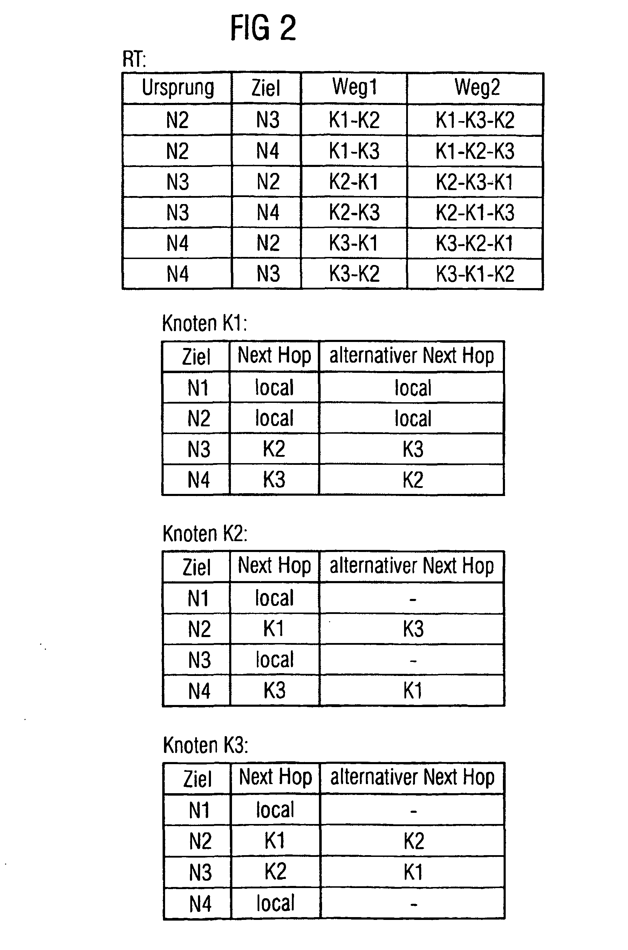

In Fig. 1 zeigt eine vereinfachte Darstellung von einem Paketnetz N1. An das Paketnetz N1 sind die Netze N2 bis N4 angeschlossen. Die Netze N1-N4 erlauben den Teilnehmerstationen bzw. Endgeräten T1-T9 miteinander zu kommunizieren. Dabei sind jeweils drei Endgeräte an die Netze N2, N3 und N4 angeschlossen (T1-T3, T4-T6 und T7-T9). Das Paketnetz N1 umfasst die Knoten K1, K2 und K3, die über die Verbindungsleitungen bzw. Links L12, L13 und L23 miteinander verbunden sind. In Fig.2, oberste Tabelle, sind für die verschiedenen Paare von Ursprungs- und Zielnetzen jeweils zwei Wege angegeben. Der erste angegebene Weg stellt den bevorzugten Weg für ein Routing dar, das sich an der (minimalen) Anzahl der Zwischenstationen bzw. Hops orientiert. Der zweite Weg stellt jeweils einen Alternativweg dar, der z.B. als Behelf bei Störungen oder Engpässen genutzt werden kann. Exemplarisch wird ein Datenübersendung von dem Netz N2 an das Netz N3 betrachtet. Der "least cost" Weg führt über die Knoten K1 und K2. Der Alternativweg vermeidet den Link L12, indem er die Weiterleitungskette K1-K3-K2 vorsieht. Dieser Alternativweg wird beispielsweise bei Ausfall des Links L12 genützt.

Die zweite bis vierte Tabelle aus Fig.2 zeigen eine herkömmliche Routingtabellen in den Knoten K1, K2 und K3. Für ein Ziel ist jeweils die nächste Station bzw. der nächste Hop und eine Alternative entsprechend der in obersten Tabelle spezifizierten Wege angegeben. Entsprechend der Routingtabelle in Knoten K1 können an das Netz N1 adressierte Datenpakete direkt (lokal) an das angeschlossene Netz N1 übermittelte werden. Dieser Sachverhalt in der Tabelle durch die Felder mit dem Begriff "lokal" wiedergegeben. An das Netz N3 gerichtete Datenpakete werden bevorzugt an den Knoten K2 weitergeroutet. Als alternatives Ziel ist der Knoten K3 tabelliert. Analog werden an das netz N4 gerichtete Datenpakete bevorzugt zu dem Konten K3 und alternativ zu dem Knoten K2 geroutet. Entsprechend sind die Routingtabellen für die Knoten K2 und k3 zu verstehen.

Diese Kombination von Routing-Tabellen lässt zu, dass beispielsweise ein von dem Netz N2 an das Netz N3 geschicktes Datenpaket, das am Knoten K1 in das Netz N1 eintritt, zunächst an den Knoten K3 weitergegeben und von diesem dann wieder an den Knoten K1 zurückgegeben wird. Z.B. bei einer Lastverteilung (load balancing) zum Zwecke einer besseren Auslastung innerhalb des Paketnetzes N1 über den bevorzugten und den alternative Weg können solche Fälle auftreten. Wenn z.B. Datenpakete grundsätzlich mit achtzigprozentiger Wahrscheinlichkeit entlang dem bevorzugten Weg geroutet werden und mit zwanzigprozentiger Wahrscheinlichkeit über den Alternativweg geroutet werden, dann tritt dieser Fall mit 0,2 * 0,2 * 100 = 4 % Wahrscheinlichkeit auf. D.h. Schleifen treten auf. Schleifen müssen insbesondere dann vermieden werden, wenn Verkehrsbeschränkung und Verkehrskontrollen an den Grenzen des Paketnetzes N1 im Hinblick auf QoS Garantien vorgenommen werden.

Dieses Problem lässt sich mit klassischem IP-Routing, das nur die Zieladresse eines Paketes berücksichtigt, nicht lösen, ohne dass die Wegevielfalt eingeschränkt wird. Im vorliegenden Beispiel müssten an mindestens zwei der Knoten die Alternativwege entfernt werden, um eine schleifenfreie Weiterleitung zu gewährleisten. Dies ist gleichzeitig die maximale Wegevielfalt, die mit Mechanismen wie ECMP (Equal Cost Multipath) mit manueller Einstellung der Kostenparameter oder mit EIGRP (Enhanced Interior Gateway Routing Protocol) und unequal cost multipath routing erreicht werden kann.

Eine Option zur Umgehung der zielbasierten Weiterleitung (destination based routing) ist die Vorgabe des Übertragungspfades, z.B. im Rahmen des MPLS Konzepts. Dabei werden jedem IP-Paket einige Bits (ein "Label") vorgeschaltet, die den Pfad referenzieren. MPLS hat jedoch den Nachteil, dass weitere Knoten auf dem Weg die ursprüngliche Wegeauswahl des Routers am Netzeingang ("ingress router") nicht mehr modifizieren können.

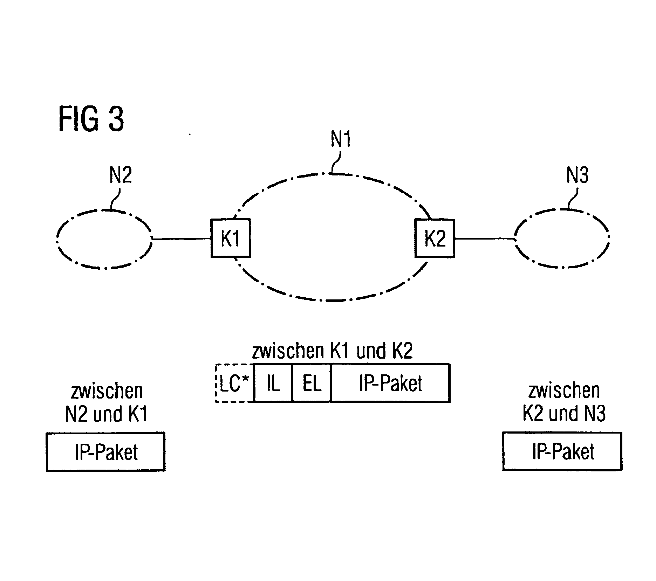

In Fig. 3 illustriert das erfindungsgemäßes Vorgehen von Informationsfeldern bzw. Labels zum Routing innerhalb des Paketnetzes N1. Es sind das Paketnetz N1 sowie die Netzes N2 und N3 dargestellt. Ein Datenpaket, das vom Netz N2 zum Netz N3 übertragen werden soll, wird beim Knoten K1, d.h. beim Netzeingang, modifiziert. Dem Datenpaket werden als Header die label EL (EL: für Egress Label) und IL (IL: für Ingress label) vorangestellt. Das Label IL umfasst eine Kennung des Eingangsrouters (ingress router) und das Label EL eine Kennung des Ausgangsrouters (egress router), an dem das Datenpaketpaket das Netz wieder verlassen soll. Optional kann auch eine zusätzliche Bitfolge LC* (LC: für label code) die Label IL und EL als solches kennzeichnen. In der Fig.3 ist schematisch ein IP-Paket mit solchen Label EL, IL und LC gezeigt, die beim Eintritt des Datenpaketes in das Netz N1 am Knoten K1 hinzugefügt und beim Austritt aus dem Netz N1 am Knoten K2 wieder entfernt werden.

Die Label EL und IL enthalten im Fall von IL die Nummer des Knotens K1 und für EL die Nummer des Knotens K2. Diese Knotennummern können beispielsweise bei der Installation der Netzknoten vergeben werden, so dass sie jeweils innerhalb eines betrachteten Paketnetzesnetzes bzw. autonomen System (in der englischsprachigen Literatur findet man häufig den Ausdruck Autonomous System) eindeutig sind. Als Label IL kann jeder Eingangsknoten des Netzes seine eigene Knotennummer einsetzen. Die Bestimmung der Knotennummer des Ausgangsknotens bzw. des Labels EL kann anhand klassischer Paketnetz-Routing-Informationen, z.B. der im Paket eingetragenen Ziel-IP-Adresse, vorgenommen werden. Die bestimmte Knotennummer des Ausgangsknotens wird dann als Label EL eingesetzt.

Innerhalb des Netzes müssen nun die Ursprungs- und Zieladressen im Header des Datenpakets nicht mehr betrachtet werden. Die Bestimmung des nächsten Knotens kann allein anhand der dem Paket vorangestellten Informationsfelder IL und EL (oder eines einzigen kombinierten Labels) geschehen. Dadurch werden die Routing-Tabellen erheblich verkleinert. Durch Kombination der Informationsfelder IL und EL zu einem Pseudo-MPLS-Label könnte darüber hinaus das Übermittlungsformat der Pakete mit MPLS kompatibel gehalten werden.

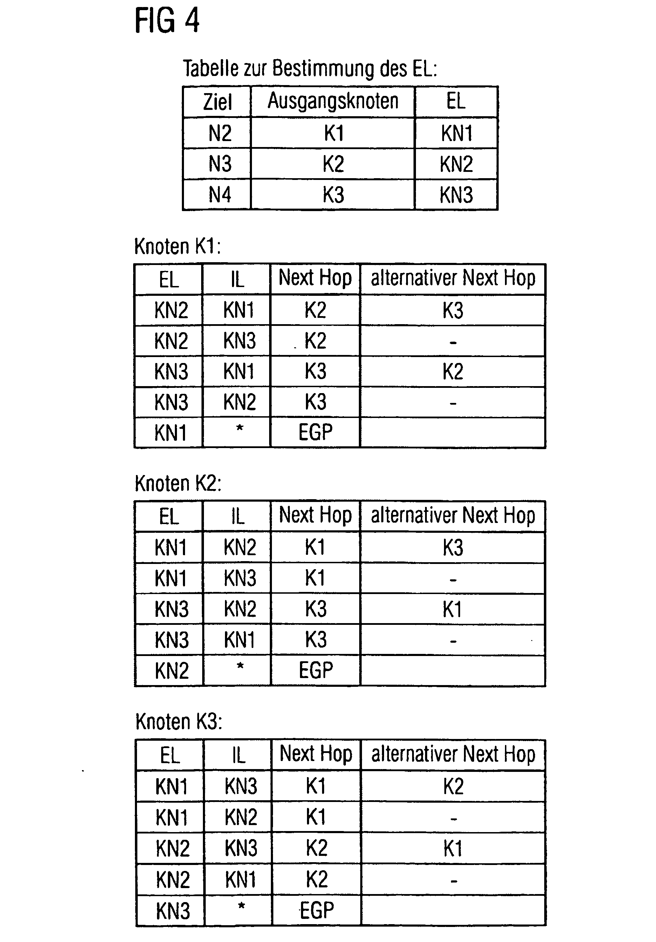

Fig. 4 zeigt erfindungsgemäße Routing-Tabellen für das Beispiel von Fig.1. Den Knoten K1, K2 und K3 seinen die Knotennummern bzw. Kontenkennungen KN1, KN2 und KN3 zugeordnet. Der Eingangsknoten, z.B. Knoten K1, verwendet dann die eigene Kontennummer, d.h. KN1 für Knoten K1, für das Label IL. Die Knotenkennung für das Label EL wird anhand einer Tabelle bestimmt. Jeder Netzknoten in N1, der mit externen Netzen verbunden ist, hat dann eine Tabelle zur Bestimmung des Ausgangeknotens. Ein Beispiel für eine derartige Tabelle gibt die oberste Tabelle aus Fig.4. Bei der Übertragung eines Datenpakets vom Netz N2 zum Netz N3 extrahiert der Eingangsknoten K1 aus besagter Tabelle der Fig.4 die Knotennummer KN2 für den Ausgangsknoten K2. Die Knotennummer KN2 wird dann für das Label EL verwendet. In der Tabelle stehen die Netze N2, N3 und N4 stellvertretend für ihre Netzknoten und alle über sie erreichbaren weiteren Netze. Die Tabellen zur Bestimmung des EL haben in etwa die Größe einer BGP-Routing-Tabelle (BGP: Border Gateway Protocol). Entsprechend wird auch der Suchaufwand zur Bestimmung eines Labels EL ähnlich moderat sein wie bei der Bestimmung eines Next Hop Routers mit Hilfe des BGP Protokolls.

Die übrigen Tabellen aus Fig.4 sind das Analogon der Routing-Tabellen aus Fig.2 für das erfindungsgemäße Verfahren. Die Routing-Tabellen haben jetzt einen Eintrag je Ingress-Egress-Knotenpaar. Wenn das Paket das Netz N1 an einem der Knoten verlassen soll, wird das Label wieder entfernt und der nächste Knoten über das externe Routing-Protokoll, (in der Literatur ist der Ausdruck exterior gateway protocol, abgekürzt EGP, üblich) bestimmt werden. Das BGP (border gateway protocol) Protokoll wird häufig zu diesem Zweck verwendet. Beispielsweise wird ein Datenpaket von dem Netz N2 zu dem Netz N3 geschickt. Der Eingangsknoten K1 bestimmt den Ausgangsknoten K2 und stellt die Kennungen KN1 und KN2 von Eingangs- und Ausgangsknoten dem Datenpaket als Label voran. Entsprechend der Routing-Tabelle für den Knoten K1 aus Fig.4 ist für das egress-ingress-Labelpaar KN2 und KN1 der bevorzugte nächste Knoten K2. Alternativ wird das Datenpaket zum Knoten K3 geroutet. Im ersten Fall wird - nach Maßgabe der dritten Tabelle von Fig.4 - vom Knoten K2 der nächste Hop mit Hilfe eines EGP Protokolls bestimmt (der Stern ist hierbei Platzhalter für irgendeine Knotenkennung). Im zweiten Fall - unterste Tabelle von Fig.4 - wird vom Knoten K3 der Knoten K2 als nächster Hop bestimmt. Es gibt keinen alternativen Hop, bzw. keine alternative Adresse. Die Schleife wird dadurch vermieden.

Die Vergabe der Knotennummern kann bei der Installation von Netzknoten manuell erfolgen. Vorzuziehen sind allerdings automatisierte Mechanismen. Dazu kann zwischen den Routern ein Protokoll ablaufen, mit dem diese sich (beispielsweise anhand der Sortierung ihrer IP-Adressen im betrachteten Netz) selbständig auf die Knotennummern einigen und anschließend die Tabellen zur Bestimmung der Egress Label EL untereinander verteilen. Werden neue Knoten in ein laufendes Netz eingebracht, so können diese die jeweils nächsten noch nicht belegten Knotennummern erhalten. Um im laufenden Betrieb eine Vereinigung von vorher getrennten Netzen zu bewerkstelligen, sind im allgemeinen weitere Mechanismen nötig.

Eine Alternative zur automatischen Selbstkonfiguration ist auch die Konfiguration durch eine zentrale Station, beispielsweise im Rahmen des Netzmanagements. Dazu kann ein Netz zunächst im normalen IP-Routing-Betrieb gestartet werden. Anschließend werden über das Netzmanagement die Knotennummern vergeben und erst dann werden die Prozesse zum Anbringen der Labels und Verteilen des Verkehrs auf mehrere Wege gestartet.

Um durch freie lokale Verteilung von Paketen auf verschiedene Wege die Reihenfolge semantisch zusammengehörender Pakete (zum Beispiel Pakete derselben TCP-Verbindung) nicht zu stören, kann dem Label durch einen Knoten am Netzeingang zusätzlich ein weiteres Feld FI (flow identifier) hinzugefügt werden, das beispielsweise einen aus Ursprungs- und Zieladresse (z.B. IP Adressen und evtl. Portnummern) des Paketes berechneten Wert enthält. Die weiteren Knoten im Netz müssen sich dann entweder für jeden Wert des Feldes FI die getroffene Wege-Entscheidung in einer dynamischen Tabelle merken, oder sie weisen in systematischer Weise (z.B. durch Aufteilung des Wertebereiches von FI) den FI-Werten bestimmte Routen zu.
Die Zuordnung zwischen FI und Wege-Entscheidung kann im Fehlerfall an jedem Knoten lokal dynamisch geändert werden.

Die Routing-Tabellen können mittels Algorithmen entweder zentral berechnet und an alle Knoten verteilt werden, oder sie werden in jedem Knoten autonom, beispielsweise mit Hilfe des OSPF (Open Shortest Path First) Protokolls ausgetauschten Link-State-Informationen, berechnet.

Das beschriebene Verfahren kann auch ohne die Übermittlung von Ingress-/Egress-Nummern in Labels eingesetzt werden. Dazu werden in jedem Netzknoten zwei weitere Tabellen vorgesehen, mit deren Hilfe er sich für jedes Paket die entsprechenden Informationen selbst errechnen kann. Die EL-Tabelle entspricht dabei der oben anhand von Fig. 4 erläuterten EL-Tabelle. Eine entsprechende IL-Tabelle kann aus den externen (EGP) Routing-Tabellen in gleicher Weise erstellt werden, wenn im EGP ein symmetrisches Routing sichergestellt wird. Symmetrisches Routing bedeutet dabei, dass der Pfad von Datenpaketen hinsichtlich der Übertragungsrichtung invariant ist, d.h. unabhängig von einer Vertauschen von Ursprungs- und Zieladresse im Datenpaketheader. Bei der Erstellung einer IL-Tabelle werden die Ursprungsadressen mit der Zugangsschnittstelle bzw. dem Zugangsknoten in Relation gesetzt. Für ein Datenpaket wird die Zugangsschnittstelle ermittelt, indem mit Hilfe des EGP die Ausgangsschnittstelle bzw. der Ausgangsknoten für Datenpakete bestimmt wird, die die Ursprungsadresse des Datenpakets als Zieladresse haben. Wegen der Symmetrie des Routings ist die bestimmte Schnittstelle bzw. der bestimmte Knoten die Zugangsschnittstelle bzw. der Zugangsknoten des Datenpakets.

Da aus Sicherheitsgründen oft ohnehin eine Überprüfung gewünscht wird, ob die Ursprungsadresse eines IP-Paketes beim Eintritt in ein Netz mit dem physikalischen Eintrittspunkt in Einklang zu bringen ist, wird die Anforderung nach symmetrischem Routing möglicherweise in Zukunft standardmäßig erfüllt werden.

Das Konzept kann auch nur mit einem Ingress Label IL verwirklicht werden. In diesem Fall würden die lokalen Routing-Tabellen anstelle der Egress Labels EL die üblichen Netzadressen enthalten und wären entsprechend größer, aber den Netzeingangsknoten würde das Nachschlagen der Egress Labels erspart werden.

## Patentansprüche

1. Verfahren zum Routing von Datenpaketen zum Vermeiden eines Kreisens der Datenpakete in einem mit Routern gebildeten Paketnetz (N1) mit Verkehrsverteilung, bei dem
ein Datenpaket (IP-Paket) von einem inneren Router des Paketnetzes (N1) weitergeleitet wird, wobei Alternativen für die Weiterleitung des Datenpakets vorgesehen sind und die Weiterleitung des Datenpaketes (IP-Paket) zumindest anhand einer Information (K1) über die Zugangsschnittstelle des Datenpaketes (IP-Paket) zu dem Paketnetz (N1) und einer Information (K2) über die Ausgangsschnittstelle, bei der das Datenpaket (IP-Paket) das Paketnetz (N1) verlassen soll, vorgenommen wird.

2. Verfahren nach Anspruch 1,
**dadurch gekennzeichnet,**
- **dass** das Datenpaket (IP-Paket) bei der Zugangsschnittstelle mit Identifikationsinformationen versehen wird, anhand derer von dem inneren Router die Zugangsschnittstelle und die Ausgangsschnittstelle identifiziert werden.

3. Verfahren nach Anspruch 2,
**dadurch gekennzeichnet,**
- **dass** die Identifikationsinformationen eine Kennung (K1, K2) oder eine Netzadresse für die Zugangsschnittstelle und die Ausgangsschnittstelle umfassen.

4. Verfahren nach Anspruch 3,
**dadurch gekennzeichnet,**
- **dass** das Datenpaket (IP-Paket) bei der Zugangsschnittstelle mit wenigstens einem Informationsfeld (IL, EL) versehen wird, und
- **dass** der innere Router dem Informationsfeld bzw. den Informationsfeldern (IL, EL) die Information (K1) über die Zugangsschnittstelle des Paketes (IP-Paket) zu dem Paketnetz (N1) und die Information (K2) über die Ausgangsschnittstelle entnimmt.

5. Verfahren nach Anspruch 4,
**dadurch gekennzeichnet,**
- **dass** das Datenpaket (IP-Paket) mit einem Informationsfeld versehen wird, wobei
-- das Informationsfeld als Header oder Trailer dem Datenpaket hinzugefügt wird,
-- das Informationsfeld eine Kennung (K1, K2) der Zugangsschnittstelle und der Ausgangsschnittstelle umfasst.

6. Verfahren nach Anspruch 4,
**dadurch gekennzeichnet,**
- **dass** das Datenpaket (IP-Paket) mit zwei Informationsfeldern (IL, EL) versehen wird, wobei
-- die Informationsfelder (IL, EL) jeweils als Header oder Trailer dem Datenpaket (IP-Paket) hinzugefügt werden,
-- das eine Informationsfeld (IL) eine Kennung (K1) der Zugangsschnittstelle und das andere Informationsfeld (EL) eine Kennung (K2) der Ausgangsschnittstelle umfasst.

7. Verfahren nach einem der Ansprüche 5 oder 6,
**dadurch gekennzeichnet,**
- **dass** wenigstens einem Informationsfeld (IL, EL) eine Bitfolge (LC*) beigefügt oder vorangestellt wird, die das Informationsfeld (IL, EL) als solches kennzeichnet.

8. Verfahren nach einem der Ansprüche 5 bis 7,
**dadurch gekennzeichnet,**
- **dass** das Datenpaket (IP-Paket) bei der Eingangsschnittstelle mit wenigstens einem Informationsfeld (IL, EL) versehen wird, und
- **dass** dieses Informationsfeld (IL, EL) bei der Ausgangsschnittstelle wieder entfernt wird.

9. Verfahren nach einem der Ansprüche 4 bis 8,
**dadurch gekennzeichnet,**
- **dass** wenigstens ein Informationsfeld (IL, EL) durch ein MPLS Label gegeben ist.

10. Verfahren nach Anspruch 3,
**dadurch gekennzeichnet,**
- **dass** die Identifikationsinformationen in eines der im Rahmen des Formats des Datenpakets vorgesehenes Feld geschrieben wird.

11. Verfahren nach einem der vorhergehenden Ansprüche,
**dadurch gekennzeichnet,**
- **dass** die Ausgangsschnittstelle durch eine Kennung (K2) referenziert wird,
- **dass** die Kennung (K2) der Ausgangsschnittstelle anhand einer Netzwerkadresse des Netzes (N3) identifiziert wird, an das das Datenpaket (IP-Paket) nach Durchquerung des Paketnetzes (N1) weitergeleitet werden soll, und
- **dass** die Identifikation der Kennung (K2) der Ausgangsschnittstelle anhand der Netzwerkadresse mit Hilfe einer Tabelle bei der Eingangsschnittstelle vorgenommen wird.

12. Verfahren nach Anspruch 1,
**dadurch gekennzeichnet,**
- **dass** das Datenpaket (IP-Paket) bei der Zugangsschnittstelle mit einer Identifikationsinformation versehen wird, anhand derer von dem inneren Router die Zugangsschnittstelle identifiziert wird,
- **dass** die Identifikationsinformation eine Kennung (K1) oder eine Netzadresse der Zugangsschnittstelle umfasst, und
- **dass** der innere Router die Information (K2) über die Ausgangsschnittstelle anhand von aus dem Datenpaket extrahierten Adressinformationen ermittelt.

13. Verfahren nach Anspruch 1,
**dadurch gekennzeichnet,**
- **dass** der innere Router die Information (K1) über die Zugangsschnittstelle und die Information (K2) über die Ausgangsschnittstelle anhand von aus dem Datenpaket (IP-Paket) extrahierten Adressinformationen ermittelt.

14. Verfahren nach einem der vorhergehenden Ansprüche,
**dadurch gekennzeichnet,**
- **dass** die Weiterleitung des Datenpaketes (IP-Paket) mit Hilfe einer Routing-Tabelle erfolgt, die die Information über die Zugangsschnittstelle des Datenpaketes (IP-Paket) zu dem Paketnetz (N1) und die Information (K2) über die Ausgangsschnittstelle einer Netzadresse für den nächsten Hop zuordnet.

15. Verfahren nach einem der vorhergehenden Ansprüche,
**dadurch gekennzeichnet,**
- **dass** das Datenpaket (IP-Paket) bei der Zugangsschnittstelle mit einem Informationsfeld zur Identifikation des Flows versehen wird, und
- **dass** die Weiterleitung des Datenpakets (IP-Paket) durch den inneren Router nach Maßgabe des Informationsfeldes vorgenommen wird.

16. Innerer Router eines Paketnetzes (N1) zur Durchführung eines Verfahrens nach einem der vorhergehenden Ansprüche,
- mit wenigstens einer Routing-Tabelle, die die Information (K1) über die Zugangsschnittstelle des Datenpaketes (IP-Paket) zu dem Paketnetz (N1) und die Information (K2) über die Ausgangsschnittstelle einer Netzadresse für den nächsten Hop zuordnet.

## Claims

1. Method for the routing of data packets for avoiding circulation of the data packets, in a packet-switched network (N1), made up of routers, which uses traffic distribution, in which
a data packet (IP packet) is forwarded by an internal router in the packet-switched network (N1), whereby alternatives are provided for the forwarding of the data packet, and the forwarding of the data packet (IP packet) is carried out by reference at least to an item of data (K1) about the access interface at which the data packet (IP packet) entered the packet-switched network (N1) and an item of data (K2) about the egress interface, at which the data packet (IP packet) is to leave the packet-switched network (N1).

2. Method according to claim 1,
**characterised in that**
- at the access interface the data packet (IP packet) is supplied with items of identification data, by reference to which the internal router identifies the access interface and the egress interface.

3. Method according to claim 2,
**characterised in that**
- the items of identification data include an identifier (K1, K2) or a network address for the access interface and the egress interface.

4. Method according to claim 3,
**characterised in that**
- at the access interface the data packet (IP packet) is supplied with at least one data field (IL, EL),
and
- the internal router takes from the data field or data fields (IL, EL), as applicable, the data (K1) about the access interface at which the packet (IP packet) entered the packet-switched network (N1) and the data (K2) about its egress interface.

5. Method according to claim 4,
**characterised in that**
- the data packet (IP packet) is supplied with a data field, where
-- the data field is added onto the data packet as a header or a trailer,
-- the data field includes an identifier (K1, K2) for the access interface and the egress interface.

6. Method according to claim 4,
**characterised in that**
- the data packet (IP packet) is supplied with two data fields (IL, EL), where
-- each of the data fields (IL, EL) is added to the data packet (IP packet) as a header or a trailer,
-- one data field (IL) includes an identifier (K1) for the access interface and the other data field (EL) includes an identifier (K2) for the egress interface.

7. Method according to one of the claims 5 or 6,
**characterised in that**
- a bit sequence (LC*) is appended to or prefixed to at least one data field (IL, EL), identifying the data field (IL, EL) as such.

8. Method according to one of the claims 5 or 7,
**characterised in that**
- at the ingress interface, the data packet (IP packet) is supplied with at least one data field (IL, EL), and
- this data field (IL, EL) is removed again at the egress interface.

9. Method according to one of the claims 4 to 8,
**characterised in that**
- at least one data field (IL, EL) is provided by an MPLS label.

10. Method according to claim 3,
**characterised in that**
- the identification data is written into a field provided as part of the format for the data packet.

11. Method according to one of the preceding claims,
**characterised in that**
- the egress interface is referenced by an identifier (K2),
- the identifier (K2) of the egress interface is determined by reference to a network address in the network (N3), to which the data packet (IP packet) is to be forwarded after it has traversed the packet-switched network (N1), and
- the determination of the identifier (K2) of the egress interface is carried out at the ingress interface by reference to the network address, using a table.

12. Method according to claim 1,
**characterised in that**
- at the access interface the data packet (IP packet) is supplied with an item of identification data, by reference to which the internal router identifies the access interface,
- this item of identification data includes an identifier (K1) or a network address for the access interface, and
- the internal router determines the data (K2) about the egress interface by reference to items of address data extracted from the data packet.

13. Method according to claim 1,
**characterised in that**
- the internal router determines the data (K1) about the access interface and the data (K2) about the egress interface by reference to items of address data extracted from the data packet (IP packet).

14. Method according to one of the preceding claims,
**characterised in that**
- the forwarding of the data packet (IP packet) is effected with the help of a routing table, which assigns the data about the access interface at which the data packet (IP packet) entered the packet-switched network (N1) and the data (K2) about the egress interface to a network address for the next hop.

15. Method according to one of the preceding claims,
**characterised in that**
- at the access interface the data packet (IP packet) is supplied with a data field for identifying the flow, and
- the forwarding of the data packet (IP packet) by the internal router is carried out as stipulated by the data field.

16. Internal router in a packet-switched network (N1) for performing a method according to one of the preceding claims,
- with at least one routing table which assigns the data (K1) about the access interface at which the data packet (IP packet) entered the packet-switched network (N1) and the data (K2) about the egress interface to a network address for the next hop.

## Revendications

1. Procédé de routage de paquets de données permettant d'éviter que des paquets de données n'effectuent des tours dans un réseau de commutation par paquets (N1) avec répartition du trafic constitué avec des routeurs, dans lequel un paquet de données (paquet IP) est réacheminé par un routeur interne du réseau de commutation par paquets (N1), des alternatives pour le réacheminement du paquet de données étant prévues et le réacheminement du paquet de données (IP) étant opéré au moins à l'aide d'une information (K1) sur l'interface d'accès du paquet de données (paquet IP) au réseau de commutation par paquets (N1) et d'une information (K2) sur l'interface de sortie où le paquet de données (paquet IP) doit quitter le réseau de commutation par paquets (N1).

2. Procédé selon la revendication 1,
**caractérisé en ce que**,
à l'interface d'accès, le paquet de données (paquet IP) se voit pourvu d'informations d'identification à l'aide desquelles l'interface d'accès et l'interface de sortie sont identifiées par le routeur interne.

3. Procédé selon la revendication 2,
**caractérisé en ce que**
les informations d'identification comprennent un identificateur (K1, K2) ou une adresse réseau pour l'interface d'accès et l'interface de sortie.

4. Procédé selon la revendication 3,
**caractérisé en ce que**
- à l'interface d'accès, le paquet de données (paquet IP) se voit pourvu d'au moins un champ d'informations (IL, EL) et
- le routeur interne tire du champ d'informations resp. des champs d'informations (IL, EL) l'information (K1) sur l'interface d'accès du paquet (paquet IP) au réseau de commutation par paquets (N1) et l'information(K2) sur l'interface de sortie.

5. Procédé selon la revendication 4,
**caractérisé en ce que**
- le paquet de données (paquet IP) se voit pourvu d'un champ d'informations,
-- le champ d'informations étant ajouté au paquet de données en tant qu'en-tête (header) ou en-queue (trailer),
-- le champ d'informations comprenant un identificateur (K1, K2) de l'interface d'accès et de l'interface de sortie.

6. Procédé selon la revendication 4,
**caractérisé en ce que**
- le paquet de données (paquet IP) se voit pourvu de deux champs d'informations (IL, EL),
-- les champs d'informations (IL, EL) étant ajoutés au paquet de données (paquet IP) respectivement en tant qu'en-tête (header) ou en-queue (trailer),
-- l'un champ d'informations (IL) comprenant un identificateur (K1) de l'interface d'accès et l'autre champ d'informations (EL) comprenant un identificateur (K2) de l'interface de sortie.

7. Procédé selon l'une des revendications 5 ou 6,
**caractérisé en ce**
- **qu'**est ajoutée ou antéposée à au moins un champ d'informations (IL, EL) une suite de bits (LC*) qui caractérise le champ d'informations (IL, EL) en tant que tel.

8. Procédé selon l'une des revendications 5 à 7,
**caractérisé en ce que**
- à l'interface d'entrée, le paquet de données (paquet IP) se voit pourvu d'au moins un champ d'informations (IL, EL) et
- ce champ d'informations (IL, EL) est de nouveau retiré à l'interface de sortie.

9. Procédé selon l'une des revendications 4 à 8,
**caractérisé en ce**
- **qu'**au moins un champ d'informations (IL, EL) est donné par une étiquette (label) MPLS.

10. Procédé selon la revendication 3,
**caractérisé en ce que**
- les informations d'identification sont écrites dans un champ prévu dans le cadre du format du paquet de données.

11. Procédé selon l'une des revendications précédentes,
**caractérisé en ce que**
- l'interface de sortie est référencée par un identificateur (K2),
- l'identificateur (K2) de l'interface de sortie est identifié à l'aide d'une adresse réseau du réseau (N3) vers lequel le paquet de données (paquet IP) doit être réacheminé après avoir traversé le réseau de commutation par paquets (N1) et
- l'identification de l'identificateur (K2) de l'interface de sortie est opérée à l'aide de l'adresse réseau à l'aide d'une table à l'interface d'entrée.

12. Procédé selon la revendication 1,
**caractérisé en ce que**
- à l'interface d'accès, le paquet de données (paquet IP) se voit pourvu d'une information d'identification à l'aide de laquelle l'interface d'accès est identifiée par le routeur interne,
- l'information d'identification comprend un identificateur (K1) ou une adresse réseau de l'interface d'accès et
- le routeur interne détermine l'information (K2) sur l'interface de sortie à l'aide d'informations d'adresse extraites du paquet de données.

13. Procédé selon la revendication 1,
**caractérisé en ce que**
- le routeur interne détermine l'information (K1) sur l'interface d'accès et l'information (K2) sur l'interface de sortie à l'aide d'informations d'adresse extraites du paquet de données (paquet IP).

14. Procédé selon l'une des revendications précédentes,
**caractérisé en ce que**
- le réacheminement du paquet de données (paquet IP) se fait à l'aide d'une table de routage qui associe l'information sur l'interface d'accès du paquet de données (paquet IP) au réseau de commutation par paquets (N1) et l'information (K2) sur l'interface de sortie à une adresse réseau pour le relais suivant.

15. Procédé selon l'une des revendications précédentes,
**caractérisé en ce que**
- à l'interface d'accès, le paquet de données (paquet IP) se voit pourvu d'un champ d'informations pour l'identification du flux et
- le réacheminement du paquet de données (paquet IP) est opéré par le routeur interne conformément au champ d'informations.

16. Routeur interne d'un réseau de commutation par paquets (N1) pour mettre en oeuvre un procédé selon l'une des revendications précédentes,
- comprenant au moins une table de routage qui associe l'information (K1) sur l'interface d'accès du paquet de données (paquet IP) au réseau de commutation par paquets (N1) et l'information (K2) sur l'interface de sortie à une adresse réseau pour le relais suivant.
